# EUROPÄISCHE PATENTSCHRIFT

(11) **EP 1 123 227 B1**
(45) Veröffentlichungstag und Bekanntmachung des Hinweises auf die Patenterteilung: **16.11.2005**
(21) Anmeldenummer: 00963888.3
(22) Anmeldetag: 08.08.2000
(51) Int. Cl.: B60S 1/24

(54) **WISCHERANLAGE**
WIPER SYSTEM
SYSTEME D'ESSUIE-GLACE

(30) Priorität: 27.08.1999 DE 19940815
(43) Veröffentlichungstag der Anmeldung: 16.08.2001
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2000/002638
(87) Internationale Veröffentlichungsnummer: WO 2001/015944

(56) Entgegenhaltungen:
- EP-A- 0 579 551
- EP-A- 0 953 488
- DE-A- 4 140 073
- DE-A- 19 912 746
- DE-C- 4 126 700
- GB-A- 2 195 880
- US-A- 5 473 955
- US-A- 5 823 065

## Beschreibung

### Stand der Technik

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfaßt eine Motorplatine, die einen Wischerantrieb mit einem Wischermotor trägt. Eine Abtriebswelle des Wischermotors treibt über eine Motorkurbel und Gelenkstangen weitere Kurbeln an, die mit einer Antriebswelle bzw. Antriebsachse für jeden Scheibenwischer fest verbunden sind.

Sind in einem Fahrzeug zwei gleichläufige Scheibenwischer vorhanden, wird in der Regel der Scheibenwischer auf der Fahrerseite von der Motorkurbel über eine daran angelenkte Gelenkstange und eine weitere Kurbel angetrieben, während der Scheibenwischer auf der Beifahrerseite häufig über eine Gelenkstange und ein Kreuzlenkergestänge angetrieben wird, das über seinen Antriebshebel mit der Gelenkstange verbunden ist. Die Kinematik des Kreuzlenkergestänges erzeugt eine kombinierte Hub-Schwenkbewegung des Scheibenwischers, so daß er besser der eckigen Kontur einer Fahrzeugscheibe folgen kann und auch Randbereiche besonders im oberen Teil der Windschutzscheibe überstreicht.

In herkömmlichen Wischeranlagen werden die beiden Scheibenwischer entweder direkt oder in Reihe angetrieben. Bei einem direkten Antrieb sind die beiden Gelenkstangen an mehreren Kugelbolzen oder an einem Doppelkugelbolzen an der Motorkurbel angelenkt. Um geringe Kräfte an den Gelenkstangen zu erhalten, besitzt die Motorkurbel eine relativ große Länge. Daraus ergibt sich ein großer Radius der Kurbelbahn, die zusammen mit dem üblicherweise kleinen Verhältnis vom Kurbelradius zur Stangenlänge von ca. 1/4 bis 1/7 ein entsprechend großes Bauvolumen und einen entsprechenden Bewegungsraum für das Wischergestänge erfordert.

Aus der EP-A- 0 781 691 ist ein Wischerantrieb als Reihenantrieb bekannt, der aus einem Wischermotor und einem Hebelgetriebe besteht. Auf der Abtriebswelle des Wischermotors sitzt eine gekröpfte Motorkurbel. Eine Gelenkstange, die über ein Kugelgelenk an der Motorkurbel angelenkt ist, ist mit ihrem freien Ende ebenfalls über ein Kugelgelenk an einer als Kurbelplatte ausgebildeten Kurbel angelenkt, die an einer Antriebswelle eines Scheibenwischers befestigt ist. An der Kurbelplatte greift über ein weiteres Kugelgelenk eine zweite Gelenkstange an, die mit ihrem freien Ende an einer Kurbel angelenkt ist, die an einer Antriebswelle für einen zweiten Scheibenwischer befestigt ist. Das aus den Kurbeln und Gelenkstangen bestehende Hebelgetriebe ist sehr aufwendig und beansprucht viel Bewegungsraum. Ferner müssen die Teile des Wischergestänges bis zum ersten Scheibenwischer, so dimensioniert werden, dass zusätzlich die für den zweiten Scheibenwischer notwendigen Kräfte übertragen werden können. Daraus ergibt sich ein sehr aufwendiges Wischergestänge mit einem hohen Gewicht und Materialeinsatz.

Die EP-A- 1 115 595 (WO-A-01/07 303), die nicht vorveröffentlicht ist, aber eine ältere Priorität besitzt, zeigt eine Wischeranlage mit einem reversierbaren Wischermotor, der über eine auf einer Motorwelle sitzende Motorkurbel und zwei Gelenkstangen eine Antriebswelle bzw. Antriebsachse zweier Scheibenwischer antreibt. Eine erste Gelenkstange ist direkt an der Motorkurbel angelenkt, während eine zweite Gelenkstange mit Abstand vom Kurbelgelenk über ein Gelenk mit der ersten Gelenkstange verbunden ist. Die erste Gelenkstange besteht aus zwei parallel zueinander verlaufenden Blechteilen, von denen ein Blechteil im Bereich eines Gelenkbolzens für die zweite Gelenkstange zu dem ersten Blechteil hingebogen ist, sodass zwischen dem Bereich einer Lagerschale an der Motorkurbel und dem Gelenkbolzen eine Kröpfung gebildet wird, um eine Kollisionsfreiheit mit anderen Antriebsteilen zu gewährleisten. Im Bereich der Kröpfung verlaufen die Blechteile mit einem Abstand zueinander, während sie durch den Gelenkbolzen gegeneinander vernietet werden. Die Lagerschale und/oder der Gelenkbolzen sind als Kugelgelenke ausgebildet.

In der EP-A- 1 137 557 (WO-A-00/34 087), die nicht vorveröffentlicht ist, aber eine ältere Priorität besitzt, ist eine Wischeranlage mit einem Wischermotor beschrieben, der über eine auf einer Motorwelle sitzenden Motorkurbel und zwei Gelenkstangen eine Antriebswelle bzw. Antriebsachse zweier Scheibenwischer antreibt. Die erste Gelenkstange ist direkt an der Motorkurbel angelenkt, während eine zweite Gelenkstange im Abstand vom Kurbelgelenk über ein Gelenk mit der ersten Gelenkstange verbunden ist.

Ferner ist aus der DE-C-41 26 700 eine Wischeranlage bekannt, bei der ein Wischermotor über eine angelenkte Schubstange einen Wischhebel antreibt. Dieser ist schwenkbar an der Fahrzeugkarosserie gelagert und gelenkig mit einer Gelenkstange verbunden, die einen zweiten Wischhebel antreibt, der ebenfalls schwenkbar an der Fahrzeugkarosserie gelagert ist. Um Schäden zu vermeiden, wenn einer der Wischhebel blokkiert, ist die angelenkte Schubstange als Stoßdämpfer ausgebildet.

Es ist ferner aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstükken bekannt. Dieses Verfahren, das vor allem für die Kraftfahrzeugindustrie verwendet wird, arbeitet mit hohen Drücken.

Das umzuformende Rohrstück wird in ein geteiltes Werkzeug gelegt, in das die gewünschte Werkstückform eingearbeitet ist. Das Werkzeug, das in einer Presse montiert ist, wird durch einen vertikal arbeitenden Pressenstößel geschlossen. Die Rohrstückenden werden durch Schließwerkzeuge geschlossen, durch die ein Druckmedium zugeführt wird, das die Rohrwandungen gegen die innere Werkzeugform presst. Dabei wird von horizontal wirkenden Stößeln ein axialer Druck auf das Rohr aufgebracht, der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt.

### Vorteile der Erfindung

In einer Wischeranlage mit zwei Scheibenwischern ist eine erste Gelenkstange direkt an einer fest mit einer Abtriebswelle eines Wischermotors verbundenen Motorkurbel angelenkt. Eine zweite Gelenkstange ist im Abstand zum Kurbelgelenk über ein Gelenk mit der ersten Gelenkstange verbunden. Während sich das Kurbelgelenk auf einer kreisförmigen bzw. bei reversierenden Wischermotoren auf einer halbkreisförmige Bahnkurve bewegt, bewegt sich das Gelenk für die zweite Gelenkstange auf einer elliptischen bzw. halbelliptischen Bahnkurve, die zum anderen Scheibenwischer hin versetzt ist. Aufgrund der flacheren Antriebsbewegung und der längeren Gelenkstange benötigt die zweite Gelenkstange einen kleineren Bewegungsraum. Diese günstige Kinematik wird durch das Kreuzlenkergestänge weiter verbessert. Außerdem besteht die Möglichkeit, durch eine Variation des Abstands der Gelenke zueinander die Lage des Wischermotors relativ zu den Wischerlagern freizügig den Platzverhältnissen im Fahrzeug anzupassen.

Da die erste Gelenkstange bis zum Gelenkbolzen für die zweite Gelenkstange auch Kräfte bzw. Momente für den zweiten Scheibenwischerantrieb aufnehmen muß, ist es vorteilhaft, die Anbindung des Kurbelgelenks und des Gelenks für die zweite Gelenkstange zu verstärken. Dazu ist die erste Gelenkstange erfindungsgemäß mindestens im Bereich einer Lagerschale für das Kurbelgelenk und eines Gelenkbolzens für die zweite Gelenkstange doppelwandig ausgeführt.

Nach einer Ausgestaltung der Erfindung ist die Gelenkstange ein Blechteil mit einem im wesentlichen U-förmigen Querschnittprofil, das im Bereich der Lagerschale zur offenen Begrenzung des U-Profils hin flach ausläuft, so daß zwischen der Lagerschale und dem Gelenkbolzen eine Kröpfung gebildet wird. Im Bereich der Lagerschale und des Gelenkbolzens weist die Gelenkstange ein Verstärkungsteil auf. Dieses verläuft parallel zum Blechteil und wird vorteilhafterweise an einem Ende durch den Nietkopf des Gelenkbolzens mit dem Blechteilvernietet. Im Bereich der Kröpfung verläuft das Verstärkungsteil mit einem Abstand zum Blechteil, wodurch ein Hohlraum gebildet und die Formsteifigkeit erhöht wird. Am Ende der Gelenkstange besitzen das Verstärkungsteil und das Blechteil übereinander liegende Öffnungen, in die eine Lagerschale aus Kunststoff für das Kurbelgelenk eingespritzt wird.

Es ist zweckmäßig, daß beim Spritzen der Lagerschale das Verstärkungsteil zum Blechteil zusätzlich zum Gelenkbolzen fixiert ist. Eine Möglichkeit besteht darin, daß das Verstärkungsteil an dem Blechteil in Längsrichtung angeformt und quer zur Längsrichtung in den Bereich mit dem u-förmigen Querschnitt umgebogen ist. Zweckmäßigerweise reicht das Verstärkungsteil in den Bereich der Schenkel des u-förmigen Profils und besitzt in diesem Bereich ebenfalls einen u-förmigen Querschnitt, wobei die Schenkel des Verstärkungsteils die Schenkel des Blechteils zumindest teilweise überdecken. Divergieren der Schenkel der U-förmigen Profile und besitzt das Verstärkungsteil ein geringes Übermaß, kann es unter einer Vorspannung spielfrei an dem Blechteil zur Anlage gebracht werden. Dadurch ergibt sich ein besserer Stützeffekt.

Eine weitere Möglichkeit besteht darin, daß das Verstärkungsteil an seiner Öffnung für die Lagerschale einen angeformten Zentrierbund aufweist, der in die entsprechende Öffnung des Blechteils eingreift und so für eine Zentrierung und Fixierung sorgt, so daß die Kräfte besser in die Gelenkstange eingeleitet werden. Hierbei kann das Verstärkungsteil entweder an dem Blechteil angeformt oder ein getrenntes Bauteil sein. Ist das Verstärkungsteil angeformt ergibt sich ein logistischer Vorteil, da sich die Anzahl der Bauteile reduziert.

Die Gelenkstange kann ferner vorteilhafterweise ein Hohlprofil aufweisen, das durch ein Innenhochdruckverfahren so verformt wird, daß das dem Gelenkbolzen abgewandte Verstärkungsteil im Bereich des Gelenkbolzens zu dem anderen Teil hin verformt ist und mit diesem durch den Nietkopf des Gelenkbolzens vernietet ist. Das Hohlprofil kann auch durch Verprägen hergestellt werden. Als Verfahren wird beispielsweise das Taumelnieten eingesetzt. In dem hoch belasteten Bereich der ersten Gelenkstange zwischen der Lagerschale und dem Gelenkbolzen bleibt das Hohlprofil jedoch erhalten, so daß sich eine formstabile Anbindung ergibt.

Erfindungsgemäß beschränkt sich die Verstärkung auf den Bereich um die Lagerschale und den Gelenkbolzen, so daß im übrigen das Wischergestänge mit einem normalerweise üblichen Querschnitt gefertigt ist. Dadurch wird Gewicht und Material eingespart. Auch kann das Konzept eines direkten Antriebs beibehalten werden, selbst wenn der Motor nahe am Wischerlager positioniert werden muß.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer erfindungsgemäßen Wischeranlage,
- Fig. 2: eine Teilansicht im Bereich einer Motorkurbel,
- Fig. 3-4: eine Darstellung von Bahnkurven der Gelenkstellen,
- Fig. 5: einen Teillängsschnitt durch eine erfindungsgemäße Gelenkstange,
- Fig. 6: einen Schnitt durch eine Gelenkstange entsprechend einer Linie VI-VI in Fig. 5,
- Fig. 7-9: Varianten zu Fig. 5 und
- Fig. 10-11: Varianten zu Fig. 6.

### Beschreibung der Ausführungsbeispiele

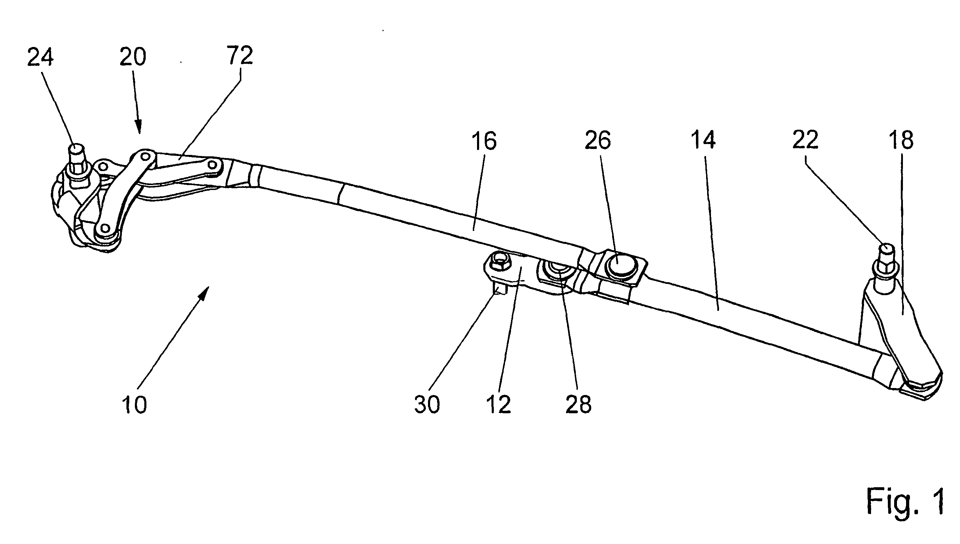

Von einer Wischeranlage 10 für zwei Scheibenwischer sind die für die Erfindung wesentlichen Teile dargestellt. Auf einer Motorwelle 30 eines nicht näher dargestellten Wischermotors sitzt eine Motorkurbel 12. An dieser ist an einem Kurbelgelenk 28 eine erste Gelenkstange 14 angelenkt, an deren anderem Ende eine Kurbel 18 angelenkt ist, die mit einer Antriebsachse 22 für einen Scheibenwischer der Fahrerseite verbunden ist. An der ersten Gelenkstange 14 ist eine zweite Gelenkstange 16 über ein Gelenk 26 angelenkt. Das freie Ende der zweiten Gelenkstange 16 bildet gleichzeitig einen Antriebshebel 72 eines Kreuzlenkergestänges 20, welches mit einer Antriebsachse 24 für einen Scheibenwischer der Beifahrerseite verbunden ist (Fig. 1).

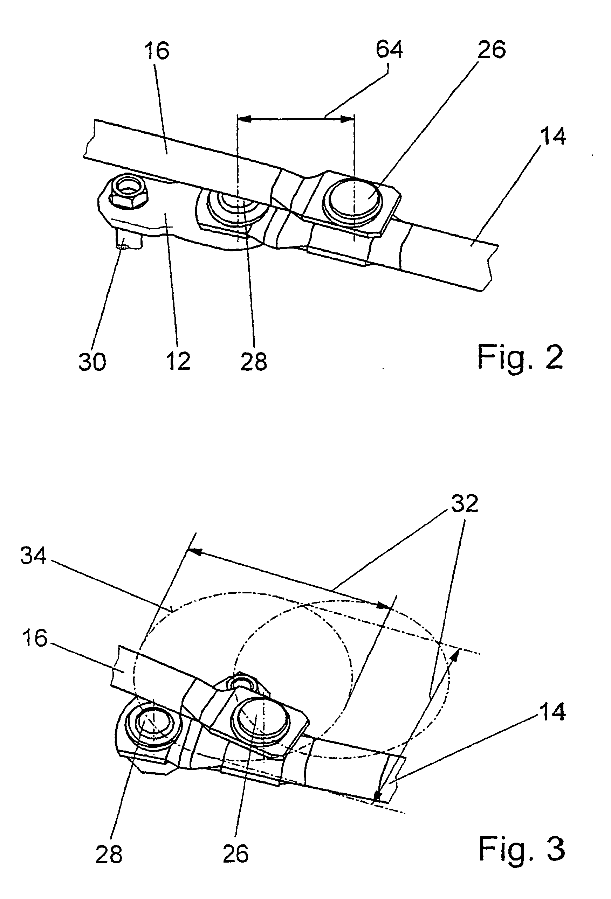

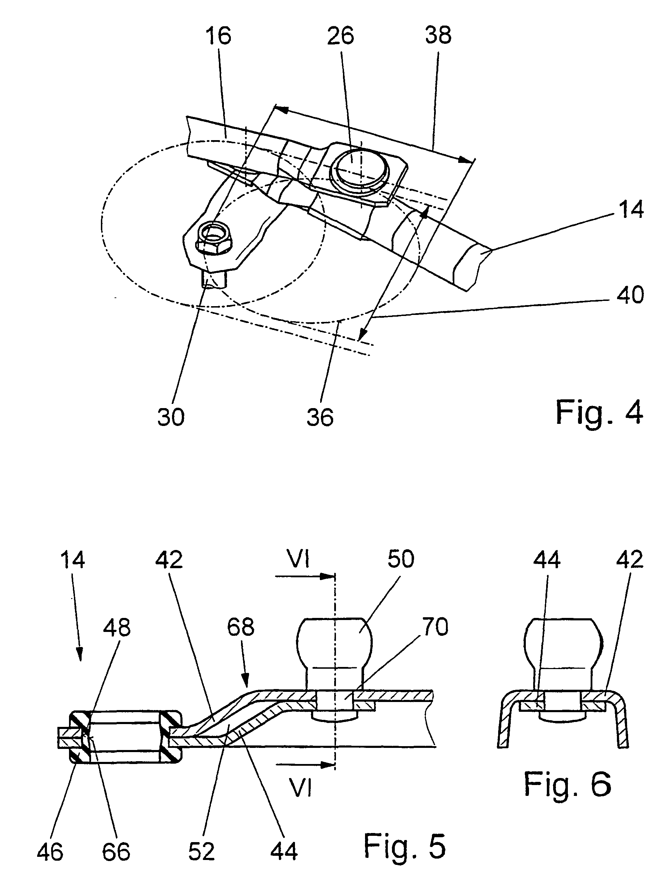

Das Kurbelgelenk 28 und das Gelenk 26 haben einen Abstand 64 (Fig. 2) zueinander, der den Verhältnissen des Einbauraums angepaßt werden kann. Je nachdem ob ein reversibler Wischermotor eingesetzt wird oder nicht, führt die Motorkurbel 12 eine halbkreisförmige bzw. kreisförmige Bewegung aus und das Kurbelgelenk 28 beschreibt eine Bahnkurve 34, die ebenfalls kreisförmig bzw. halbkreisförmig ist und einen Durchmesser 32 aufweist (Fig. 3). Die Bahnkurve 34 ist damit gleichzeitig die Antriebskurve für den Scheibenwischer auf der Fahrerseite. Durch den Abstand 64 zwischen den Gelenken 26 und 28 bewegt sich das Gelenk 26 auf einer flacheren, elliptischen Bahnkurve 36 (Fig. 4). Dabei ist die Länge 38 gleich dem Durchmesser 32, während die Breite 40 deutlich kleiner ist. In der Regel bildet die Bahnkurve 36 die Antriebskurve für den Scheibenwischer auf der Beifahrerseite. Die Gelenkstange 14 ist im Bereich zwischen dem Gelenk 26 und dem Kurbelgelenk 28 gekröpft, um genügend Bewegungsfreiheit zueinander bzw. zu anderen Bauteilen zu ermöglichen.

Die Gelenkstange 14 ist ein Blechteil 42, die eine Lagerschale 46 zum Anlenken an die Motorkurbel 12 und einen Gelenkbolzen 50 zum Anlenken der zweiten Gelenkstange 16 aufweist (Fig. 5). Das Blechteil 42 besitzt im Bereich der Lagerschale 46 und des Gelenkbolzens 50 ein Verstärkungsteil 44, welches ebenfalls aus Blech besteht. Das Blechteil 42 und das Verstärkungsteil 44 weisen an einem Ende der Gelenkstange 14 eine Öffnung 48 auf, an der sie vor dem Anspritzen der Lagerschale 46 deckungsgleich gefügt werden. Das Verstärkungsteil 44 ist so gekröpft, daß es im Bereich der Lagerschale 46 am Blechteil 42 anliegt, anschließend in Längsrichtung einen Hohlraum 52 zu diesem bildet und im Bereich des Gelenkbolzens 50 wieder zum Blechteil 42 hin gebogen ist. An dieser Stelle sind die beiden Teile 42, 46 miteinander vernietet. Dabei versteift der Hohlraum 52 die Gelenkstange 14 im Bereich der größten Belastungen.

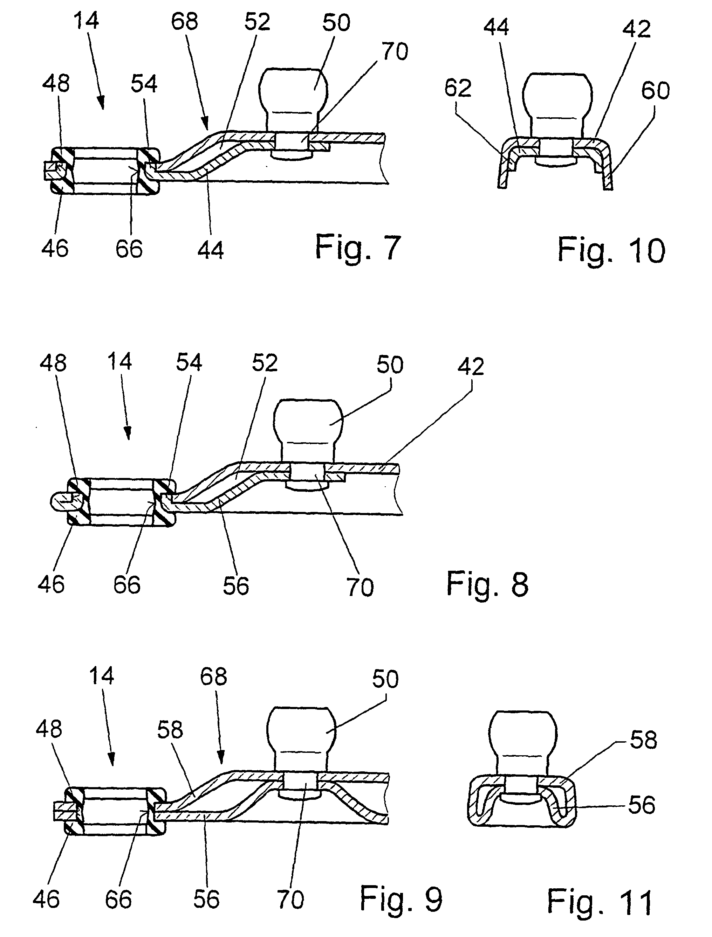

In einer Variante der Erfindung weist das Verstärkungsteil 44 an seiner Öffnung 48 einen angeformten Zentrierbund 54 auf, mit dem es in der Öffnung 48 des Blechteils 42 gehalten wird (Fig. 7). Dadurch ist die Verbindung zwischen dem Blechteil 42 und dem Verstärkungsteil 44 im Bereich der Öffnung 48 durch einen Formschluß verstärkt und der Widerstand gegenüber Zug- und Druckkräften wird zusätzlich erhöht. Ferner können auf die Lagerschale 46 keine Scherkräfte wirken. Die Ausführung nach Fig. 8 zeigt ein Blechteil 42 mit einem im Bereich der Lagerschale 46 angeformten Verstärkungsteil 56. Vor dem Spritzen der Lagerschale 46 wird das Verstärkungsteil 56 umgebogen und zwar so, daß der angeformte Zentrierbund 54 in die Öffnung 48 des Blechteils 42 eingreift.

Im Gegensatz zum Blechteil 42, das in allen Ausführungen mindestens im Bereich des Gelenkbolzens 50 ein U-förmiges Profil aufweist, ist das Verstärkungsteil 44 entweder als flaches Blechteil ausgeführt (Fig. 6) oder es besitzt ebenfalls ein U-Profil (Fig. 10). In jedem Fall befindet sich das Verstärkungsteil 44 innerhalb des U-Profils des Blechteils 42. Wenn beide Teile u-förmig ausgebildet sind, ist es zweckmäßig, daß die Schenkel 60 und 62 leicht divergieren und die Schenkel 62 des Verstärkungsteils 44 ein geringes Übermaß haben, so daß sie unter einer Vorspannung an den Innenseiten des Blechteils 42 anliegen. Durch die Vorspannung wird eine dauerhafte Verbindung zwischen dem Blechteil 42 und dem Verstärkungsteil 44 erreicht, die sich auch durch dynamische Belastungen nicht lockert.

Bei der Ausführung nach Fig. 9 ist die Gelenkstange 14 ein Blechteil 58, das aus einem Hohlprofil geformt ist. Mit Hilfe eines Innenhochdruckverfahren erhält es seine endgültige Form. Der untere Teil dient als Verstärkungsteil 56 und liegt im Bereich der Lagerschale 46 flach an der gegenüberliegenden Wand des Blechteils 58 an. Die Öffnungen 48 sind bündig. Im Bereich des Gelenkbolzens 50 ist der Verstärkungsteil 56 zu der anderen Wand hin gebogen und mit dieser durch den Nietkopf 70 des Gelenkbolzen 50 vernietet. In den Zwischenbereichen bleibt das Hohlprofil erhalten, und zwar in Längsrichtung und im Querschnitt, so daß die Gelenkstange 14 eine hohe Biege- und Torsionssteifigkeit aufweist (Fig. 11). Die Kröpfung 68 zwischen der Lagerschale 46 und dem Gelenkbolzen 50 wird dadurch erreicht, daß die obere Wand des Hohlprofils im Bereich der Lagerschale 46 zur unteren Begrenzung des Hohlprofils verformt ist.

In allen Ausführungen der Erfindung ist die Lagerschale 46 ein Kunststoffteil und weist kugelförmige Lagerflächen 66 auf. Auch der Gelenkbolzen 50 ist als Kugelgelenk ausgebildet. Die Lagerfläche 66 kann auch als Zylinderfläche ausgeführt sein.

## Patentansprüche

1. Wischeranlage (10) mit einem Wischermotor, der eine Antriebswelle bzw. Antriebsachse (22, 24) zweier Scheibenwischer über eine auf einer Motorwelle (30) sitzende Motorkurbel (12) und zwei Gelenkstangen (14, 16) antreibt, von denen eine erste Gelenkstange (14) direkt an der Motorkurbel (12) angelenkt ist, während eine zweite Gelenkstange (16) im Abstand vom Kurbelgelenk (28) über ein Gelenk (26) mit der ersten Gelenkstange (14) verbunden ist, wobei die erste Gelenkstange (14) im Wesentlichen ein U-förmiges Querschnittprofil hat und als Blechteil (42, 58) geformt ist, das mindestens im Bereich einer Lagerschale (46) und eines Gelenkbolzens (50) doppelwandig ausgeführt ist, wobei ein in das offene U-Profil hineinragendes Verstärkungsteil (44, 56) im Bereich des Gelenkbolzens (50) zu dem anderen Blechteil (42, 58) hingebogen und mit diesem vernietet ist.

2. Wischeranlage (10) nach Anspruch 1, **dadurch gekennzeichnet, dass** der Gelenkbolzen (50) einen Nietkopf (70) hat, mit dem das Verstärkungsteil (44, 56) mit dem anderen Blechteil (42, 58) vernietet ist.

3. Wischeranlage (10) nach Anspruch 1 oder 2, **dadurch gekennzeichnet, dass** das Verstärkungsteil (44) an dem Blechteil (42) in Längsrichtung angeformt ist und am Ende der Gelenkstange (14) um ca. 180° quer zur Längsrichtung umgebogen ist.

4. Wischeranlage (10) nach einem der vorhergehenden Ansprüche, **dadurch gekennzeichnet, dass** das Verstärkungsteil (44) im Bereich des Gelenkbolzens (50) ein U-förmiges Profil hat, dessen Schenkel (62) die Schenkel (60) des Blechteils (42) zumindest teilweise überdecken.

5. Wischeranlage (10) nach Anspruch 4, **dadurch gekennzeichnet, dass** die Schenkel (60, 62) der U-förmigen Profile leicht divergieren und mit einer Vorspannung aneinander liegen.

6. Wischeranlage (10) nach einem der vorhergehenden Ansprüche, **dadurch gekennzeichnet, dass** das Verstärkungsteil (44) an einer Öffnung (48) für die Lagerschale (46) einen Zentrierbund (54) hat und mit diesem in eine entsprechende Öffnung des Blechteils (42) eingreift.

7. Wischeranlage (10) nach Anspruch 1, **dadurch gekennzeichnet, dass** das Blechteil (58) aus einem Rohrprofil geformt ist.

8. Wischeranlage (10) nach Anspruch 7, **dadurch gekennzeichnet, dass** das Blechteil (58) mit einem Innenhochdruckverfahren hergestellt ist.

9. Wischeranlage (10) nach einem der vorhergehenden Ansprüche, **dadurch gekennzeichnet, dass** die Gelenkstange (14) zwischen dem Bereich der Lagerschale (46) und des Gelenkbolzens (50) eine Kröpfung (68) aufweist, durch die die Bewegungsfreiheit zu anderen Bauteilen ermöglicht wird.

10. Wischeranlage (10) nach Anspruch 9, **dadurch gekennzeichnet, dass** das Verstärkungsteil (44, 56) im Bereich der Kröpfung (68) mit einem Abstand zum Blechteil (42, 58) verläuft und einen Hohlraum (52) bildet.

## Claims

1. Wiper system (10) having a wiper motor which drives a drive shaft or drive spindle (22, 24) of two wipers via a motor crank (12), which sits on a motor shaft (30), and two hinged rods (14, 16) of which a first hinged rod (14) is coupled directly to the motor crank (12) while a second hinged rod (16) is connected to the first hinged rod (14) via a hinge (26) at a distance from the crank hinge (28), the first hinged rod (14) having essentially a U-shaped cross-sectional profile and being formed as a sheet-metal part (42, 58) which is of double-walled design at least in the region of a bearing shell (46) and of a hinge pin (50), a reinforcing part (44, 56) which projects into the open U-profile being bent in the region of the hinge pin (50) towards the other sheet-metal part (12, 58) and being riveted thereto.

2. Wiper system (10) according to Claim 1, **characterized in that** the hinge pin (50) has a rivet head (70) with which the reinforcing part (44, 56) is riveted to the other sheet-metal part (42, 58).

3. Wiper system (10) according to Claim 1 or 2, **characterized in that** the reinforcing part (44) is integrally formed on the sheet-metal part (42) in the longitudinal direction and is bent over at the end of the hinged rod (14) through approx. 180° transversely to the longitudinal direction.

4. Wiper system (10) according to one of the preceding claims, **characterized in that** the reinforcing part (44) has, in the region of the hinge pin (50), a U-shaped profile, the limbs (62) of which at least partially cover the limbs (60) of the sheet-metal part (42).

5. Wiper system (10) according to Claim 4, **characterized in that** the limbs (60, 62) of the U-shaped profiles slightly diverge and bear against each other with a prestress.

6. Wiper system (10) according to one of the preceding claims, **characterized in that** the reinforcing part (44) has a centring collar (54) on an opening (48) for the bearing shell (46) and engages by means of this centring collar in a corresponding opening of the sheet-metal part (42).

7. Wiper system (10) according to Claim 1, **characterized in that** the sheet-metal part (58) is formed from a tubular profile.

8. Wiper system (10) according to Claim 7, **characterized in that** the sheet-metal part (58) is produced by an internal high-pressure method.

9. Wiper system (10) according to one of the preceding claims, **characterized in that** the hinged rod (14) has, between the region of the bearing shell (46) and the hinge pin (50), an offset (68) by means of which the freedom of movement with respect to other components is made possible.

10. Wiper system (10) according to Claim 9, **characterized in that** the reinforcing part (44, 56) runs in the region of the offset (68) at a distance from the sheet-metal part (42, 58) and forms a cavity (52).

## Revendications

1. Système d'essuie-glace (10) comportant un moteur entraînant un ou des axes d'entraînement (22, 24) de deux essuie-glaces par une manivelle (12) portée par l'arbre (30) du moteur et deux biellettes articulées (14, 16) dont la première biellette (14) est directement articulée à la manivelle (12) du moteur et la seconde biellette (16) est reliée à distance de l'articulation de manivelle (28) par une articulation (26) à la première biellette (14), dans lequel
la première biellette (14) a une section essentiellement en forme de U et est une pièce en tôle (42, 58) mise en forme, réalisée au moins à double paroi au niveau d'une coupelle de palier (46) et d'un axe d'articulation (50), et
une pièce de renforcement (44, 46) pénétrant dans le profil en U ouvert, au niveau du goujon d'articulation (50), est recourbée vers l'autre pièce en tôle (42, 58) est rivetée à celle-ci.

2. Système d'essuie-glace (10) selon la revendication 1,
**caractérisé en ce que**
le goujon d'articulation (50) porte une tête de rivet (70) par laquelle la pièce de renforcement (44, 56) est rivetée à l'autre pièce en tôle (42, 58).

3. Système d'essuie-glace (10) selon l'une quelconque des revendications 1 ou 2,
**caractérisé en ce que**
la pièce de renforcement (44) est formée sur la pièce en tôle (42), dans la direction longitudinale et est recourbée transversalement à la direction longitudinale à l'extrémité de la biellette (14), sur un angle d'environ 180° transversalement à la direction longitudinale.

4. Système d'essuie-glace (10) selon l'une quelconque des revendications précédentes,
**caractérisé en ce que**
la pièce de renforcement (44) a une section en forme de U au niveau du goujon d'articulation (50) et les branches (62) de cette section couvrent au moins en partie les branches (60) de la pièce en tôle (42).

5. Système d'essuie-glace (10) selon la revendication 4,
**caractérisé en ce que**
les branches (60, 62) de la section en forme de U sont légèrement divergentes et sont appliquées l'une contre l'autre en précontrainte.

6. Système d'essuie-glace (10) selon l'une quelconque des revendications précédentes,
**caractérisé en ce que**
la pièce de renforcement (44) a une ouverture (48) pour la coupelle de palier (46) au niveau d'une collerette de centrage (54) et pénètre avec celle-ci dans une ouverture correspondante de la pièce en tôle (42).

7. Système d'essuie-glace (10) selon la revendication 1,
**caractérisé en ce que**
la pièce en tôle (58) est formée dans un profilé brut.

8. Système d'essuie-glace (10) selon la revendication 7,
**caractérisé en ce que**
la pièce en tôle (58) est réalisée par un procédé de haute pression intérieure.

9. Système d'essuie-glace (10) selon l'une quelconque des revendications précédentes,
**caractérisé en ce que**
la biellette articulée (14) comporte une partie cintrée (68) entre la zone de la coupelle de palier (46) et le goujon d'articulation (50), qui permet la liberté de mouvement par rapport aux autres pièces.

10. Système d'essuie-glace (10) selon la revendication 9,
**caractérisé en ce que**
la pièce de renforcement (44, 56) arrive à distance sur la pièce en tôle (42, 58) au niveau de la partie cintrée (68) et forme un espace creux (52).
